# EUROPÄISCHE PATENTSCHRIFT

(11) **EP 3 976 337 B1**
(45) Veröffentlichungstag und Bekanntmachung des Hinweises auf die Patenterteilung: **12.07.2023**
(21) Anmeldenummer: 20742416.9
(22) Anmeldetag: 21.05.2020
(51) Int. Cl.: B29C 45/14, B44C 5/00, B44C 5/04, B29K 703/06, B29K 703/08, B29K 709/00, B29K 711/10, B29L 31/30, B29L 31/00

(54) **SPRITZGUSSTEIL UND VERFAHREN ZUR HERSTELLUNG DES SPRITZGUSSTEILS**
INJECTION-MOULDED PART AND METHOD FOR PRODUCING THE INJECTION-MOULDED PART
PIÈCE MOULÉE PAR INJECTION ET PROCÉDÉ POUR LA FABRICATION DE LA PIÈCE MOULÉE PAR INJECTION

(30) Priorität: 24.05.2019 HU 1900182
(43) Veröffentlichungstag der Anmeldung: 06.04.2022
(73) Patentinhaber: GUDLIN, Zsófia, 2627 Zebegény (HU)
(72) Erfinder: GUDLIN, Zsófia, 2627 Zebegény (HU)
(74) Vertreter: Danubia Patent & Law Office LLC
(86) Internationale Anmeldenummer: PCT/HU2020/000018
(87) Internationale Veröffentlichungsnummer: WO 2020/240219

(56) Entgegenhaltungen:
- EP-A1- 3 056 331
- EP-A1- 3 210 742
- WO-A1-2010/132906
- WO-A1-2013/020617
- US-A1- 2017 113 383
- Gerd Habenicht: "Einteilung und Aufbau der Klebstoffe", Kleben : Grundlagen, Technologien, Anwendungen, 31. Dezember 2009 (2009-12-31), Seiten 3-14, XP055723326, DE DOI: DOI 10.1007/978-3-540-85266-7 ISBN: 978-3-540-85264-3 Gefunden im Internet: URL:https://www.springer.com/de/book/97835 40852643 [gefunden am 2020-08-18]
- Thomas Härtig: "Stoffübertragung beim Spritzgießen", Dissertation, 28. Februar 2013 (2013-02-28), XP055723360, Gefunden im Internet: URL:https://monarch.qucosa.de/id/qucosa%3A 18814 [gefunden am 2020-08-18]

## Beschreibung

Gegenstand der Erfindung ist ein Spritzgussteil und ein Verfahren zur dessen Herstellung. Das Spritzgussteil besteht aus einer Kunststoffbasisschicht, mindestens einer vorzugsweise transparenten oder transluzenten Deckschicht, und einer zwischen der Deckschicht und der Basisschicht angeordneten Dekorschicht, welche Dekorelemente beinhaltet. Die Herstellung des Spritzgussbauteils kann mit einem solchen Verfahren geschehen, bei dem
- auf die Deckschicht Dekorelemente aufgebracht werden und
- auf die Dekorelemente mittels Kunststoffspritzguss eine Basisschicht aufgetragen wird.

Das Verfahren kann zur Herstellung von Dekor- und Verkleidungsbauteilen für die Fahrzeug-, Flugzeug- und Möbelindustrie sowie zur Gestaltung von Kunstwerken angewandt werden.

Zur Herstellung von Dekorelementen für das Autointerieur ist das Spritzgussverfahren eine bekannte Vorgehensweise, während dessen in den Hohlraum eines Werkzeugs eine dekorative Schicht (z.B. Aluminium, Holzfurnier, bedruckte Dekorfolie) eingelegt wird. Auf die zum Werkzeug zeigenden Innenfläche der dekorativen Schicht ist als Haftvermittler eine Klebschicht auflaminiert. Dann wird durch Einspritzen eines thermoplastischen Kunststoffes in den Werkzeughohlraum die Basisschicht des Spritzgussteils ausgebildet. Während des Spritzvorganges wird die dekorative Schicht gegen die Innenfläche des Werkzeughohlraums gedrückt und die dekorative Schicht geht durch die auflaminierte Klebschicht eine Haftung mit der Basisschicht ein. In einer anderen bekannten Variante des Spritzgussverfahrens wird die Dekorschicht vor dem Einlegen ins Spritzgusswerkzeug vorgeformt. Mit diesem Verfahren können dank der Dekorschicht ästhetische Bauteile wesentlich günstiger hergestellt werden als es beispielsweise durch Metallguss möglich wäre. Durch das Spritzgussverfahren sind nicht nur zusammenhängende Dekorflächen, sondern auch dekorative Flächen bestehend aus mehreren einzelnen dekorativen Elementen fixierbar. Bei der Anwendung von separaten Dekorelementen ist es problematisch, dass der einströmende Kunststoff die Dekorelemente wegspült, wodurch diese anders angeordnet werden, und ihre Verteilung auf der Oberfläche geändert wird. Eine Lösung für dieses Problem bietet beispielsweise das veröffentlichte Dokument DE 10 2012 016 147 A1 bei dem auf ein zweischichtiges Oberflächendekor zur Versteifung ein thermoplastischer KunststoffBasisschicht aufgespritzt wird. Gemäß dem hier beschriebenen Verfahren wird auf die erste zusammenhängende ganzflächige Dekorschicht eine zweite aus mehreren einzelnen Dekorelementen bestehende Dekorschicht aufgeklebt. Dann erfolgt das Spritzgießen der Kunststoffbasisschicht auf die erste zusammenhängende Dekorschicht und gegebenenfalls das Aufbringen einer Deckschicht, die als Schutzschicht auf der Seite der zweiten dekorativen Schicht dient. Diese Lösung hat jedoch den Nachteil, dass keine der dekorativen Schichten in die aufgespritzte Kunststoffbasisschicht eingebettet ist, so dass sich die dekorativen Schichten aufgrund mechanischer Beanspruchung leicht von der Basisschicht lösen können.

Das Dokument EP 3210742 A1 offenbart ein Verfahren zum Herstellen eines Mehrkomponenten-Spritzguss-Formteiles. Das Verfahren umfasst die folgende Verfahrensschritte:
a. Einbringen eines folienartigen Elements in einen ersten Formhohlraum, so dass eine erste Oberfläche des folienartigen Elements an einer Innenwand des ersten Formhohlraums anliegt, wobei eine zweite Oberfläche des folienartigen Elements mit dreidimensionalen Elementen bestückt ist, welche von der zweiten Oberfläche des folienartigen Elements in den ersten Formhohlraum hineinragen;
b. Einbringen eines Formkerns in den ersten Formhohlraum, so dass eine erste Kavität gebildet wird;
c. Einspritzen eines ersten Kunststoffmaterials in die erste Kavität, wobei das eingespritzte erste Kunststoffmaterial die dreidimensionalen Elemente umschließt und mit dem folienartigen Element eine Verbindung eingeht, wobei hierdurch ein Vorspritzteil mit einer äußeren Oberfläche, an welcher das folienartige Element haftet, gebildet wird;
d. Transferieren des Vorspritzteils in einen zweiten Formhohlraum, wobei die äußere Oberfläche des Vorspritzteils und eine Innenwand des zweiten Formhohlraums eine zweite Kavität bilden;
e. Einspritzen eines zweiten Kunststoffmaterials in die zweite Kavität, wobei das eingespritzte zweite Kunststoffmaterial mit dem folienartigen Element eine Verbindung eingeht.

Das Dokument WO 2010/132906 A1 offenbart ein Verfahren zur Herstellung eines mit mindestens einem Schmuckstein versehenen Gegenstandes, wobei der mindestens einen Schmuckstein in oder an einer Haltevorrichtung angeordnet und mittels eines Spritzgusses mit einer Kunststoffschmelze hinterspritzt wird Maschine. Die Haltevorrichtung umfasst eine Trägerfolie, auf oder durch die der mindestens einen Schmuckstein während des Spritzgussvorgangs gehalten wird.

Das Dokument EP 3056331 A1 offenbart ein Verfahren zur Herstellung eines Verbundkörpers umfassend einen Trägerkörper und wenigstens einen Dekorkörper, vorzugsweise einen Schmuckstein, wobei der Trägerkörper thermoplastisches Material umfasst, wobei das Verfahren die folgenden Schritte umfasst: anordnen des Dekorkörpers auf dem Trägerkörper; erwärmen des Trägerkörpers und eindrücken des Dekorkörpers in den Trägerkörper mit einem Stempel aus elastisch verformbarem Material.

Das Ziel der Erfindung ist es, die Nachteile vom Stand der Technik zu vermeiden und den Spritzgussprozess so zu modifizieren, dass die aus mehreren einzelnen dekorativen Elemente bestehende Dekorschicht unmittelbar vor dem Spritzgussvorgang in ihrer Musterung und Ausbildung beliebig gestaltet werden kann und dass dieses Muster und/oder diese Ausbildung während des Spritzgussprozesses unverändert bleibt.

Ein weiteres Ziel der vorliegenden Erfindung ist es, ein Spritzgussteil und dessen Herstellverfahren anzugeben, das eine stärkere Oberflächenhaftung und eine höhere Bindungskraft zwischen den einzelnen Schichten gewährleistet, wodurch die Belastbarkeit und die Lebensdauer des fertigen Spritzgussteils erhöht wird.

Gemäß der, der Erfindung zu Grunde liegenden Erkenntnis bleibt das vorab gebildete Dekormuster auf der Deckschicht während der einzelnen Schritte des Spritzgussprozesses im Wesentlichen unverändert, wenn ausreichende Haftung zwischen den die Dekorschicht bildenden einzelnen Dekorelementen und der Deckschicht realisiert wird. Wenn außerdem die Dekorelemente der Dekorschicht zumindest teilweise in die benachbarten Schichten eingebettet sind, können die Bindungskräfte zwischen den einzelnen Schichten signifikant erhöht werden.

Entsprechend der Zielvorgabe gehen wir von einem Spritzgussteil aus, das eine Kunststoffbasisschicht, eine vorzugsweise transparente oder transluzente Deckschicht, ferner eine aus mehreren einzelnen Dekorelemente bestehende und zwischen der Deckschicht und Basisschicht befindliche Dekorschicht aufweist. Gemäß der Erfindung sind im Spritzgussteil die Dekorelemente der Dekorschicht sowohl in die Basisschicht wie auch in die Deckschicht eingebettet. Der Einbettungsgrad in der Deckschicht, bezogen auf die Größe der mittleren Querschnittsfläche der einzelnen Dekorelemente beträgt zweckmäßig 1-90%, der restliche Bereich der Dekorelemente ist in der Basisschicht eingebettet. Mit einem solchem Aufbau des Spritzgussteils kann einerseits sichergestellt werden, dass ausreichende Haftung zwischen den Dekorelementen der Dekorschicht und der Deckschicht erzeugt wird, so dass das ursprünglich gebildete Muster und Gestaltung während des Prozesses des Spritzgießens im Wesentlichen unverändert bleiben. Andererseits, da die Dekorelemente der Dekorschicht zumindest teilweise in der Deckschicht und der Basisschicht eingebettet sind und hierdurch die Bindungskraft zwischen den einzelnen Schichten erheblich erhöht ist, wird die Belastbarkeit und die Lebensdauer des Produktes während seiner Benutzung auch bei auftretenden mechanischen Beanspruchungen gewährleistet.

In einer bevorzugten Ausführungsfonn des erfindungsgemäßen Spritzgussartikels besteht die Deckschicht aus duroplastischem Kunststoff, die eine Klebefläche aufweist, welche die Position der dekorativen Elemente vor dem Aushärten sichert. Auf die Deckschicht mit der Klebefläche können die dekorativen Elemente nach einem vorgegebenen Muster oder in zufälliger Anordnung (z.B. durch Aufstreuen) aufgebracht werden. Wegen der klebrigen Oberfläche der Deckschicht bleibt die Anordnung der Dekorelemente während der Schritte des Spritzgussprozesses unverändert.

Bei einer anderen möglichen Ausbildung des nach vorliegender Erfindung hergestellten Spritzgussteils beinhaltet die Deckschicht eine transparente oder transluzente äußere tragende Kunststoffschicht, auf deren zu den Dekorelementen zeigenden Innenfläche eine duroplastische Kunststoffschicht aufgetragen wird, welche vor dem Aushärten als Klebschicht zum Fixieren der Position der Dekorelemente dient.

Bei einer weiteren möglichen Ausbildung des nach vorliegender Erfindung hergestellten Spritzgussteils wird die aus der Basisschicht, aus der Schicht mit den Dekorelementen und aus der Deckschicht bestehenden Einheit mit einer zweiten identisch mehrschichtigen Einheit kombiniert, wobei die äußere Basisschicht aus transparentem oder transluzentem Kunststoff besteht.

Beim gemäß der Erfindung hergestellten Spritzgussteil wird die Basisschicht und die Klebschicht bildende Deckschicht aus thermoplastischem oder duroplastischem Kunststoff ausgebildet. Um die Verschleißfestigkeit der Deckschicht, die die Außenschicht bildet, zu erhöhen, ist es zweckmäßig, einen duroplastischen Kunststoff einzusetzen.

Beim gemäß der Erfindung hergestellten Spritzgussteil sind die Dekorelemente (3) aus Abfallprodukten und/oder aus Naturstoffen gebildet.

Gemäß der Erfindung gehen wir von einem für die Herstellung von Spritzgussteilen geeigneten Verfahren aus, bei dem auf eine Deckschickt Dekorelemente aufgebracht werden und auf die Dekorelemente die Basisschicht durch Spritzgiessen aufgetragen wird.

Bei dem erfindungsgemäßen Verfahren
- werden einzelne Dekorelemente auf eine Decksicht mit klebriger Oberfläche aufgetragen,
- werden die Dekorelemente in die Deckschicht mit einem auf die Größe der mittleren Querschnittsfläche der einzelnen Dekorelemente bezogenem Einbettungsgrad von zweckmäßig 1 bis 90% eingebettet,
- wird die Trocknung der klebrigen Deckschicht abgewartet,
- wird die Basisschicht auf die Dekorelemente durch Spritzgiessen aufgetragen, so dass sie den restlichen Bereich der Dekorelemente einbettet. Der Einbettungsgrad in der Basisschicht, bezogen auf die Größe der Dekorelemente beträgt zweckmäßig 99-10%.

Bei dem erfindungsmäßigen Verfahren werden als Dekorelemente Abfallprodukte und/oder Naturstoffe verwendet. Auf die als Klebschicht dienenden Deckschicht werden die Dekorelemente nach vorher festgelegtem Muster oder in zufälliger Anordnung z.B. mittels Streuung aufgebracht. Diese Anordnung bleibt, durch die Klebkraft der Deckschicht, insbesondere nach dessen Austrocknung, im Prozess des Spritzgießens im Wesentlichen unverändert.

Bei einer bevorzugten Variante des erfindungsmäßigen Verfahrens wird die Deckschicht mit der klebrigen Oberfläche auf eine zuvor entsprechend der Form des Spritzgusswerkzeuges vorgeformte Trägerschicht aufgetragen. Diese vorgeformte Trägerschicht bildet die Form der äußeren Oberfläche des fertigen Spritzgussteils. Bei einer Kunststoffträgerschicht ist es zweckmäßig, einen transparenten oder durchscheinenden Kunststoff zu verwenden, um die Sichtbarkeit der Dekorelemente zu gewährleisten.

Bei einer weiteren möglichen Variante des erfindungsmäßigen Verfahrens wird eine Trägerschicht aus Metall verwendet, die nach dem Spritzgießen vom Spritzgussteil getrennt wird. Als Metallträgerschicht wird aufgrund ihrer leichten Formbarkeit vorzugsweise eine Aluminiumträgerschicht verwendet. Diese Trägerschicht wird beispielsweise durch Kaltumformen aus Blech ausgebildet, es kann jedoch jedes andere bekannte Umformverfahren angewandt werden.

Bei einer weiteren möglichen Variante des erfindungsmäßigen Verfahrens wird die klebende Deckschicht in eine - vorzugsweise untere - Innenfläche des Spritzgusswerkzeuges aufgetragen.

Bei einer weiteren bevorzugten Variante des erfindungsmäßigen Verfahrens wird eine äußere Trägerschicht aus Kunststoff verwendet, auf deren zu den Dekorelementen gerichteten Innenfläche duroplastischer Kunststoff aufgetragen ist, der vor dem Aushärten als klebrige Oberfläche zum Fixieren der Dekorelemente dient.

Bei einer weiteren möglichen Variante des erfindungsmäßigen Verfahrens wird die aus einer Basisschicht, einer Zwischenlage mit Dekorelementen und einer Deckschicht bestehenden mehrschichtigen Struktur mit einer zweiten identisch aufgebauten mehrschichtigen Struktur kombiniert und so eine mehrschichtige Konstruktion ausgebildet, deren äußere Basisschicht aus transparentem oder transluzentem Kunststoff besteht.

Im Folgenden werden, anhand der in den Zeichnungen dargestellten Ausführungsbeispielen, das Spritzgussteil der vorliegenden Erfindung und das Verfahren zur Herstellung des Spritzgussteils beschrieben.
Fig. 1 zeigt in einem Schnittbild die auf eine Trägerschicht 5 aufgebrachte Deckschicht 2 mit klebender Oberfläche, worauf die Dekorelemente 3 angeordnet sind,
Fig. 2 zeigt ebenfalls in einem Schnittbild die Anordnung gemäß Fig.1, welche in die untere Hälfte eines zweiteiligen Spritzgusswerkzeugs 1 eingelegt ist,
Fig. 3 zeigt die Anordnung gemäß Fig. 2 nach dem Spritzgießen mit einer Basisschicht 4,
Fig. 4 zeigt das Spritzgussteil nach Entnahme aus dem Werkzeug mit der Trägerschicht 5,
Fig. 5 zeigt das Spritzgussteil gemäß Fig.4 nach dem Entfernen der Trägerschicht 5,
Fig. 6 zeigt im Querschnitt die auf die untere Hälfte des zweiteiligen Spritzgusswerkzeugs 1 aufgetragene Deckschicht 2 mit klebriger Oberfläche worauf die Dekorelemente 3 angeordnet werden,
Fig. 7 zeigt die Anordnung gemäß Fig.6 nach dem Spritzgießen mit der Basisschicht 4,
Fig. 8 zeigt das aus dem Werkzeug entnommene Spritzgussteil mit der Deckschicht 2, den Dekorelementen 3, und Basisschicht 4.
Fig. 9 zeigt das aus dem Werkzeug entnommene Spritzgussteil mit Deckschicht 2, Dekorelementen 3, transparentem oder transluzenter Basisschicht 4 als Trägerschicht 5' für eine weitere Deckschicht 2', eine weitere Schicht 3'mit Dekorelementen, und eine weitere Basisschicht 4'.
Fig. 10 zeigt das aus dem Werkzeug entnommene Spritzgussteil mit Trägerschicht 5 aus transparentem oder transluzentem Kunststoff, Deckschicht 2, Dekorelementen 3, transparenter oder transluzenter Basisschicht 4 als Trägerschicht 5' für eine weitere Deckschicht 2', eine weitere Schicht mit Dekorelementen 3', und eine weitere Basisschicht 4'.

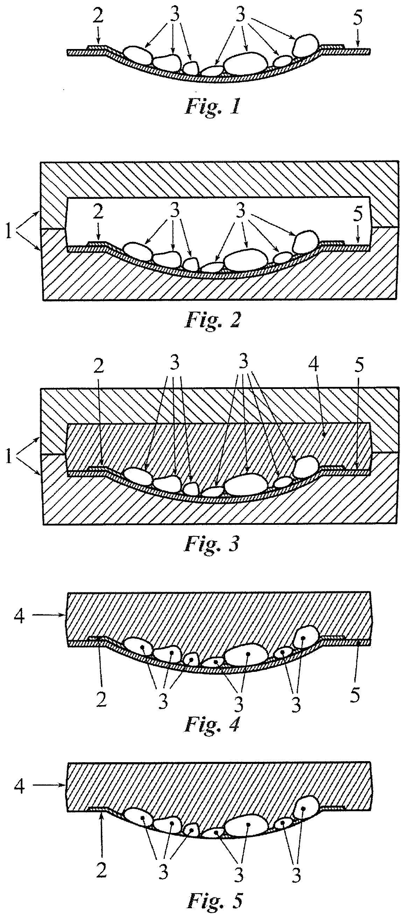

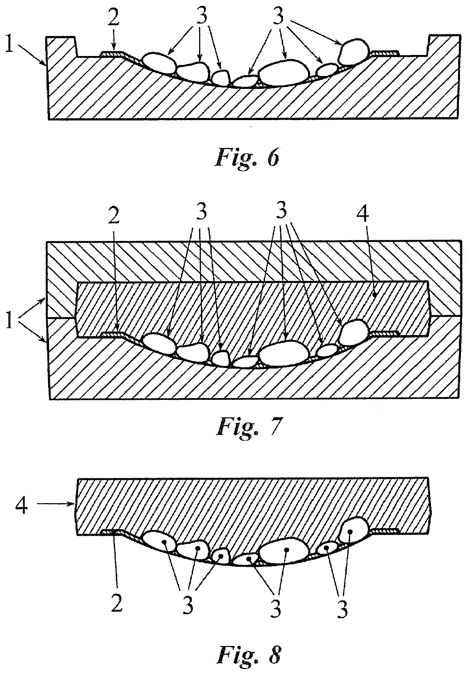

Fig. 1-5 zeigen im Querschnitt die wesentlichen Schritte der möglichen Ausführungsvariationen des erfindungsgemäßen Verfahrens mit einer Trägerschicht 5. Fig. 6-8 zeigen im Querschnitt die wesentlichen Schritte einer weiteren möglichen Ausführung, wobei sich die Dekorelemente 3 unmittelbar auf der Innenfläche der unteren Hälfte des Spritzgusswerkzeugs 1 befinden. Um die benötigte Haftung zu erreichen wird in diese Innenfläche des Werkzeugs mit einer klebrigen Deckschicht 2 versehen.
Fig.1 zeigt die auf die Trägerschicht 5 aufgetragene klebrige Deckschicht 2 und die Dekorelemente 3, welche durch die klebrige Deckschicht 2 auf der Trägerschicht 5 fixiert werden. Die Deckschicht 2 kann beispielsweise durplastischer Kunststoff sein, der vor dem Auftragen auf die Trägerschicht flüssig und gut verarbeitbar ist. Die Dekorelemente 3, die aus Abfallprodukten, Naturstoffen oder anderen relativ kleinen, regelmäßig oder unregelmäßig geformten Elementen bestehen können, können entweder gemäß einem vorbestimmten Muster oder zufällig, beispielsweise durch Aufstreuen, auf die Deckschicht 2 aufgebracht werden. Die Größe der Dekorelemente 3 liegt zweckmäßig zwischen 1 und 10 mm, vorzugsweise zwischen 2 und 8 mm, oder bevorzugtzwischen 3 und 6 mm. Die Dekorelemente 3 sind in die Deckschicht 2 eingebettet, wobei der Einbettungsgrad in der Deckschicht 2, bezogen auf die Größe der mittleren Querschnittsfläche der einzelnen Dekorelemente 3 zielgemäß 1-90% beträgt. Die Dicke der Deckschicht 2 liegt zweckmäßig zwischen 0,1 mm und 5 mm, vorzugsweise zwischen 0,2 und 3 mm und bevorzugt zwischen 0,5 und 2 mm.

Nachdem die Dekorelemente 3 auf die im Wesentlichen flüssigen oder zumindest streichfähigen klebrigen Deckschicht 2 aufgelegt sind und nach Bedarf eine weitere klebrige Deckschicht aufgetragen wird, wird die Trocknung der Deckschicht 2 abgewartet, sprich die Entstehung der geklebten Bindung zwischen den Dekorelementen 3 und der Deckschicht 2.

Anschließend wird die Trägerschicht 5 mit der Deckschicht 2 und den Dekorelementen 3 in das Spritzgusswerkzeug eingelegt, vorzugsweise in dessen untere Hälfte, wie in Fig. 2 dargestellt. Nach der Schließung der beiden Werkzeughälften ist es möglich den Hohlraum des Werkzeugs 1 mit der aus Kunststoff bestehenden Basisschicht 4 durch den Spritzgussprozess zu füllen. Fig. 3 zeigt den Zustand im Spritzgusswerkzeug 1 nach dem Spritzgussprozess. Die Basisschicht 4 besteht zweckmäßig aus thermoplastischem Kunststoff, der vorzugsweise nicht transparent oder transluzent ist, sondern zielgemäß ein gefärbter oder in seinem Grundmaterial farbiger Kunststoff ist. Die Farbe der Dekorelemente 3 und der Grundschicht 4 sind zielgemäß unterschiedlich aber ansonsten beliebig wählbar gemäß der zu erzielenden Erscheinung der Dekoroberfläche. In Fig. 4 ist das fertige Spritzgussteil nach der Entnahme aus dem Werkzeug dargestellt, welches sich von der Anordnung gemäß Fig. 1 dadurch unterscheidet, dass die Dekorelemente 3 auch in der Basisschicht 4 eingebettet sind. In der Zeichnung ist die Basisschicht 4 oberhalb der Dekorelemente 3 dargestellt, wogegen in Einbaulage der Bauteile befindet sich die Basisschicht auf der nicht sichtbaren Rückseite der Bauteile.

Die Basisschicht 4 bettet den restlichen Bereich der Dekorelemente 3 ein, da ihre Schichtstärke mindestens der größten Dicke der Dekorelemente 3 entspricht. Die Dekorelemente sind auch in der Basisschicht 4 eingebettet, so dass der Einbettungsgrad bezogen auf die größte Abmessung der 3 Dekorelemente vorzugsweise zwischen 99% und 10% beträgt.

In dem Fall, dass die Trägerschicht 5 aus einem Metallblech (z. B. Aluminium) besteht, wird die Trägerschicht 5 zweckmäßig nach der Entnahme des Spritzgussteils aus dem Werkzeug 1 entfernt, so dass die Trägerschicht 5 kein Bestandteil des Spritzgussartikels bleibt. Nach dem Entfernen der Trägerschicht 5 werden die Deckschicht aus transparentem oder transluzentem Material, die darunter liegende Dekorschicht der Dekorelemente 3 sowie dahinter die Basisschicht 4 sichtbar, wie in Fig. 5 gezeigt. Zur Optimierung der haptischen und ästhetischen Wirkung ist es nachfolgend möglich die Oberfläche der Deckschicht 2 zu schleifen und / oder zu polieren und gegebenenfalls zu lackieren. Mit dem Schleifen ist es möglich die Deckschicht 2 zumindest teilweise zu entfernen. Mit der vollständigen Entfernung der Deckschicht 2 werden die Dekorelemente 3 freigelegt und unmittelbar abtastbar und sichtbar. Nach der vollständigen Entfernung der Deckschicht ist es ratsam, die Dekorelemente 3 mit einer ästhetischen oder schützenden Lackschicht abzudecken.

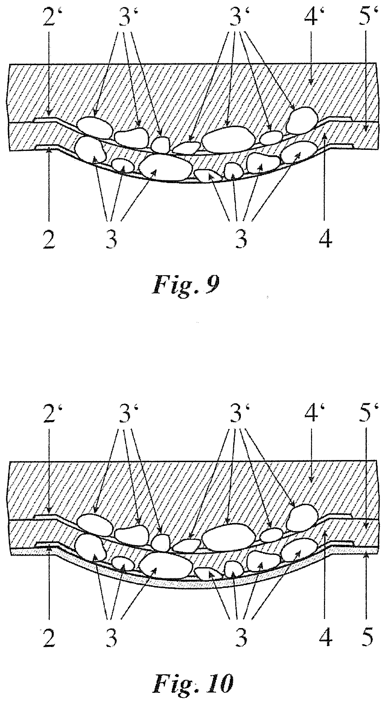

In dem Fall, dass die Trägerschicht 5 eine vorgeformten Kunststoffträgerschicht ist, bestehend vorzugsweise aus transparentem oder transluzentem Material, ist es nicht nötig die Trägerschicht 5 vom Spritzgussteil nach der Entnahme aus dem Werkzeug 1 zu entfernen. In diesem Fall bildet die Trägerschicht 5 zusammen mit der Deckschicht 2, welche die Dekorelemente 3 sichert, und der Basisschicht 4, welche die Dekorelemente 3 rückseitig einbettet, einen Bestandteil des Spritzgussprodukts. Eine solche Trägerschicht kann gegebenenfalls auch mit der Konstruktion des in Fig. 4 und Fig. 5 gezeigten Spritzgussteils identisch sein, in diesem Fall erhalten wir ein mehrschichtiges Spritzgussprodukt, wie in Fig. 9 und Fig. 10 dargestellt.

In einer anderen Variante des erfindungsgemäßen Verfahrens wird die Deckschicht 2 nicht auf eine Trägerschicht 5 aufgebracht, sondern direkt auf die Innenfläche der unteren Hälfte des Spritzgusswerkzeugs 1, wie in Fig. 6 gezeigt. Die Dekorelemente 3 können auf die gleiche Weise wie in Fig. 1 gezeigt auf der Deckschicht 2 platziert werden, deswegen wird es nicht noch einmal im Detail beschrieben. Fig. 7 zeigt das Spritzgusswerkzeug 1 mit dem fertigen Bauteil, bestehend aus der Deckschicht 2 mit klebriger Oberfläche oder Substanz, aus der Dekorschicht mit den Dekorelementen 3 und aus der Basisschicht 4, die durch Spritzgießen im Hohlraum des Werkzeugs 1 ausgebildet wird. Fig. 8 zeigt das fertige Spritzgussteil nach der Entnahme aus dem Spritzgusswerkzeug 1. Da in dieser Prozessvariante keine Trägerschicht 5 verwendet wird, muss diese nicht entfernt werden bzw. sie ist nicht Bestandteil des Spritzgussprodukts.

Es ist auch möglich, ein Spritzgussteil auszubilden, bei dem das Spritzgussprodukt nach Fig. 4 oder 5 mit dem Spritzgussprodukt nach Fig. 8 kombiniert wird, indem man sie übereinanderlegt beziehungsweise es durch Spritzgießen realisiert. Bei der Konstruktion eines solchen mehrschichtigen Spritzgussteils besteht die der sichtbaren Seite zugewandte Basisschicht vorzugsweise auch aus einem transparenten oder durchscheinenden Material. Bei einer solchen Anordnung und geeigneter Materialwahl werden zwei oder gegebenenfalls mehrere Schichten mit Dekorelementen 3 hintereinander sichtbar, wie in Fig. 9 und Fig. 10 dargestellt.
Das in Fig. 5 gezeigte Spritzgussteil hat eine Kunststoff-basisschicht 4, eine vorzugsweise transparente oder durchscheinende Deckschicht 2 und eine Dekorschicht bestehend aus den Dekorelementen 3, die zwischen der Basisschicht 4 und der Deckschicht 2 angeordnet sind, wobei die Zwischenschicht mit den Dekorelementen 3 zumindest teilweise in die Basisschicht 4 und die Deckschicht 2 eingebettet ist. Der Einbettungsgrad in der Basisschicht, bezogen auf die Dicke der Dekorelemente beträgt zweckmäßig 10-99%, der restliche Bereich der Dekorelemente 3 ist in die Basisschicht eingebettet. Demzufolge der Einbettungsgrad in der Deckschicht, bezogen auf die größte Abmessung der Dekorelemente beträgt zweckmäßig 90-1%.

Die Deckschicht 2 ist beispielsweise eine Schicht aus duroplastischem Kunststoff, die vor dem Aushärten eine klebrige Oberfläche aufweist, die die Position der Dekorelemente 3 fixiert, oder in seiner Gänze klebendes Material, wie beispielsweise ein Klebstoff.

Bei dem in Fig.4 dargestellten Spritzgussteil beinhaltet die Deckschicht 2 eine transparente oder transluzente äußere Kunststoffträgerschicht 5, auf deren den Dekorelementen 3 zugewandten Innenfläche ein duroplastischer Kunststoff aufgetragen ist, die eine klebrige Oberfläche aufweist, welche die Position der Dekorelemente 3 vor dem Aushärten fixiert oder in seiner Gänze klebendes Material, wie beispielsweise ein Klebstoff.

Das Spritzgussteil in Fig. 5 kann mit sich selbst oder mit dem Spritzgussteil in Fig.4 kombiniert werden, um somit einen mehrschichtigen Spritzgussteil zu realisieren. Dieser besteht aus zumindest zwei Einheiten, wobei jede Einheit zumindest eine Basisschicht 4 bzw. 4', eine Dekorschicht mit Dekorelementen 3 bzw. 3' und eine Deckschicht 4 bzw. 4` beinhaltet, wobei die äußere Basisschicht 4 aus einem transparenten oder transluzentem Kunststoff besteht (siehe Fig. 9 und 10.).

Die Basisschicht ist beispielsweise ein Thermoplast, und die Deckschicht 2, welche die Klebstoffschicht bildet, ist vorzugsweise duroplastischer Kunststoff.

Die Dekorelemente 3 können Abfallmaterialien oder Naturmaterialien sein. Verwendbare Abfallmaterialien sind beispielsweise, aber nicht ausschließlich: Abfälle aus Herstellungsprozessen: Holzspäne, Metallspäne, Metallsplitter, Kunststoffabfälle, Papierreste, Karbon- Glas- oder Basaltfasern, Textilreste, Metallfolienreste, Lackreste. Verwendbare Naturmaterialien können beispielsweise sein, aber nicht ausschließlich: Kies, Schneckenhaus, Muschel, Obstschale, Holz, Mineralien. Die Anordnung der Dekorelemente 3 ist gemäß der zu erzielenden dekorativen Erscheinung frei gestaltbar.

In einer möglichen Variante des erfindungsgemäßen Verfahrens zur Herstellung eines Spritzgussteils sind die Verfahrensschritte wie folgt:
a) es wird eine Trägerschicht 5 aus einem Metallblech durch Kaltumformen hergestellt,
b) die Trägerschicht 5 wird in den unteren Teil eines Spritzgusswerkzeugs 1 eingelegt,
c) die Deckschicht 2 wird auf die Trägerschicht 5 aufgetragen,
d) die Dekorelemente 3 werden auf die Deckschicht 2 gestreut,
e) die Trocknung der klebrigen Deckschicht 2 wird abgewartet,
f) die Hälften des Spritzgusswerkzeugs 1 werden zusammengefügt und das Spritzgusswerkzeug 1 wird geschlossen,
g) die Basisschicht 4 wird im Werkzeughohlraum durch Spritzgießen ausgebildet,
h) das Werkzeug 1 wird geöffnet und das Spritzgussteil wird entnommen,
i) die Trägerschicht 5 wird vom Spritzgussteil getrennt.

Als zusätzlicher Schritt kann nach Bedarf die Oberfläche der freiliegenden Deckschicht 2 bearbeitet werden. Der im Beispiel angegeben Verfahrensschritt b) kann wahlweise auch nach dem Verfahrensschritt d) erfolgen. Der Verfahrensschritt c) kann bedarfsweise für die ausreichende Haftung der Dekorelemente 3 nach d) wiederholt werden.

In einer weiteren möglichen Variante des erfindungsgemäßen Verfahrens zur Herstellung eines Spritzgussteils sind die Verfahrensschritte wie folgt:
a) es wird eine Trägerschicht 5 aus einem transparenten oder transluzenten Kunststoff hergestellt,
b) die Trägerschicht 5 wird in den unteren Teil eines Spritzgusswerkzeugs 1 eingelegt,
c) die Deckschicht 2 wird auf die Trägerschicht 5 aufgetragen,
d) die Dekorelemente 3 werden auf die Deckschicht 2 gestreut,
e) die Trocknung der klebrigen Deckschicht 2 wird abgewartet,
f) die Hälften des Spritzgusswerkzeugs 1 werden zusammengefügt und das Spritzgusswerkzeug 1 wird geschlossen,
g) die Basisschicht 4 wird im Werkzeughohlraum durch Spritzgießen ausgebildet,
h) das Werkzeug 1 wird geöffnet und das Spritzgussteil wird entnommen,

Bei dieser Variante wird die Trägerschicht 5 nicht vom fertigen Spritzgussteil getrennt, da sie Bestandteil des Produktes bildet. Der im Beispiel angegebene Verfahrensschritt b) kann wahlweise auch nach dem Verfahrensschritt d) erfolgen. Der Verfahrensschritt c) kann bei Bedarf für die ausreichende Haftung der Dekorelemente 3 nach d) wiederholt werden.

In einer weiteren bevorzugten Variante des erfindungsgemäßen Verfahrens zur Herstellung eines Spritzgussteils sind die Verfahrensschritte wie folgt:
a) Die Deckschicht 2 wird auf die Innenfläche des unteren Teils des Spritzgusswerkzeugs 1 aufgetragen,
b) die Dekorelemente 3 werden auf die Deckschicht 2 gestreut,
c) die Trocknung der klebrigen Deckschicht 2 wird abgewartet,
d) die Hälften des Spritzgusswerkzeugs 1 werden zusammengefügt und das Spritzgusswerkzeug 1 wird geschlossen,
e) die Basisschicht 4 wird durch Spritzgießen im Werkzeughohlraum ausgebildet,
f) das Werkzeug 1 wird geöffnet und das Spritzgussteil wird entnommen.

Als zusätzlicher Schritt kann nach Bedarf die Oberfläche der frei gewordenen Deckschicht 2 bearbeitet werden. Der Verfahrensschritt a) kann bei Bedarf für die ausreichende Haftung der Dekorelemente 3 nach b) wiederholt werden.

Die Deckschicht 2 besteht bei jedem Verfahrensbeispiel aus transparentem oder transluzentem, duroplastischem Kunststoff mit klebriger Oberfläche.

Der Vorteil des erfindungsgemäßen Spritzgussteils besteht darin, dass die in der Deckschicht 2 und Basisschicht 4 eingebetteten Dekorelemente 3 mit hoher Festigkeit miteinander verbunden werden können, wodurch verhindert wird, dass sich die Dekorelemente 3 während des Spritzgießens verschieben oder neu anordnen, und im Fall des fertigen Produktes eine hohe Belastbarkeit während der Montage und/oder Benutzung des Bauteiles gewährleistet wird.

Das Verfahren kann in vielen Varianten ausgeführt werden, wodurch die Anzahl der möglichen Produktvarianten erheblich erhöht wird. Außerdem besteht die Möglichkeit nicht nur Einkomponenten-, sondern auch Zwei- oder Mehrkomponenten-Spritzgussverfahren anzuwenden.

### Verwendete Bezeichnungen:

- 1: Spritzgusswerkzeug
- 2, 2': Deckschicht (mit klebriger Oberfläche)
- 3, 3': Dekorelemente
- 4, 4': Basisschicht
- 5, 5': Trägerschicht

## Patentansprüche

1. Verfahren zur Herstellung eines Spritzgussteils, wobei
a) eine entsprechend einer Form eines Spritzgusswerkzeugs vorgeformte Trägerschicht (5) verwendet wird;
b) auf einer Seite der Trägerschicht (5) eine klebrige Deckschicht (2) aufgetragen wird;
c) auf die Deckschicht (2) eine Vielzahl einzelner Dekorelemente (3) aufgebracht wird, wodurch die Dekorelemente (3) sich zumindest teilweise in die Deckschicht (2) einbetten;
d) die Deckschicht (2) ausgehärtet wird, wodurch die Dekorelemente (3) auf der Trägerschicht (5) fixiert werden;
e) im Spritzgusswerkzeug wird auf die von der Trägerschicht (5) entgegengesetzte Seite der Deckschicht (2) eine Basisschicht (4) aufgetragen;
**dadurch gekennzeichnet, dass**
f) als Deckschicht eine aushärtende Deckschicht verwendet wird und die Deckschicht in einem Processschritt ausgehärtet wird;
g) die Dekorelemente durch Aufstreuen auf die Deckschicht aufgebracht werden, und
h) die Trägerschicht (5) vom aus der Basisschicht (4), den Dekorelementen (3) und der Deckschicht (2) bestehenden fertigen Produkt entfernt wird, wobei die dekorative Oberfläche auf der äußeren Seite des Spritzgussteiles freigelegt wird.

2. Verfahren nach Anspruch 1, **dadurch gekennzeichnet, dass** die vorgeformte Trägerschicht (5) aus Metallblech oder Kunststoff ausgebildet ist.

3. Verfahren nach Anspruch 1 oder 2, **dadurch gekennzeichnet, dass** die Deckschicht (2) aus aushärtendem Kunststoff oder aushärtendem Klebstoff besteht.

4. Verfahren nach einem der Ansprüche 1 bis 3, **dadurch gekennzeichnet, dass** die Deckschicht (2 ) aus transparentem oder transluzentem Kunststoff besteht.

5. Verfahren nach einem der Ansprüche 1 bis 4, **dadurch gekennzeichnet, dass** in einem weiteren Verfahrensschritt die freiliegende Deckschicht (2) des fertigen Produktes, vorzugsweise durch Schleifen oder Polieren, bearbeitet wird.

6. Verfahren nach einem der Ansprüche 1 bis 5, **dadurch gekennzeichnet, dass** die dekorative Oberfläche mit einer Lackschicht abgedeckt wird.

7. Verfahren nach einem der Ansprüche 1 bis 6, **dadurch gekennzeichnet, dass** die Dekorelemente (3) aus Abfallprodukten und Naturstoffen gebildet werden.

8. Verfahren nach einem der Ansprüche 1 bis 7, **dadurch gekennzeichnet, dass** die Dekorelemente (3) aus der folgenden Gruppe von Materialien ausgewählt werden: Holzspäne, Metallspäne, Metallsplitter, Kunststoffabfälle, Papierreste, Karbon- Glas- oder Basaltfasern, Textilreste, Metallfolienreste, Lackreste oder verwendbare Naturmaterialien, beispielsweise Kies, Schneckenhaus, Muschel, Obstschale, Holz, Mineralien.

9. Verfahren nach einem der Ansprüche 1 bis 8, **dadurch gekennzeichnet, dass** aus einer eine Basisschicht (4), eine Zwischenschicht mit Dekorelementen (3) und eine Deckschicht (2) beinhaltenden mehrschichtigen Konstruktion, sowie aus einer zweiten, ebenfalls eine Basisschicht (4'), eine Zwischenlage mit Dekorelementen (3'), und eine Deckschicht (2') beinhaltenden mehrschichtigen Konstruktion, eine mehrschichtige Struktur ausgebildet wird, wo die äußere Basisschicht (4') aus transparentem oder transluzentem Kunststoff besteht.

10. Spritzgussteil mit einer dekorativen Oberfläche, bestehend aus einer durch Spritzgießen hergestellten Kunststoff-Basisschicht (4), einer auf einer Seite der Basisschicht (4) befindlichen Deckschicht (2) und aus zwischen diesen in beide Schichten eingebetteten Vielzahl von Dekorelementen (3),
**dadurch gekennzeichnet, dass**
die Dekorelemente (3) in zufälliger Anordnung verteilt sind, und
auf der äußeren Seite des Spritzgussformteiles die Dekorelemente (3) und die Deckschicht (2) zusammen eine dekorative Oberfläche bilden.

11. Spritzgussteil nach Anspruch 10, **dadurch gekennzeichnet, dass** die Deckschicht (2) aus transparentem oder transluzentem Material besteht.

12. Spritzgussteil nach Anspruch 10 oder 11, **dadurch gekennzeichnet, dass** die Dekorelemente (3) aus Abfallprodukten und Naturstoffen gebildet werden.

13. Spritzgussteil nach einem der Ansprüche 10 bis 12, **dadurch gekennzeichnet, dass** die Dekorelemente (3) aus der folgenden Gruppe von Materialien ausgewählt werden: Holzspäne, Metallspäne, Metallsplitter, Kunststoffabfälle, Papierreste, Karbon- Glas- oder Basaltfasern, Textilreste, Metallfolienreste, Lackreste oder verwendbare Naturmaterialien, beispielsweise Kies, Schneckenhaus, Muschel, Obstschale, Holz, Mineralien.

14. Spritzgussteil nach einem der Ansprüche 10 bis 13, **dadurch gekennzeichnet, dass** aus einer eine Basisschicht (4), eine Zwischenschicht mit Dekorelementen (3) und eine Deckschicht (2) beinhaltenden mehrschichtigen Struktur (5'), sowie einer zweiten, eine Basisschicht (4'), eine Zwischenlage mit Dekorelementen (3') und eine Deckschicht (2') beinhaltenden Struktur eine vielschichtige Konstruktion ausgebildet ist, wobei die äußere Basisschicht (4) aus transparentem oder transluzentem Kunststoff besteht.

15. Spritzgussteil nach einem der Ansprüche 10 bis 14, **dadurch gekennzeichnet, dass** die dekorative Oberfläche mit einer Lackschicht abgedeckt wird.

## Claims

1. A method for producing an injection-moulded part, wherein
a) providing a carrier layer (5) pre-formed according to a shape of an injection moulding tool;
b) applying a sticky cover layer (2) to one side of the carrier layer (5);
c) applying a plurality of individual decorative elements (3) to the cover layer (2), wherein the decorative elements (3) are at least partly embedded in the cover layer (2);
d) curing the cover layer (2), whereby the decorative elements (3) are fixed on the carrier layer (5);
e) in the injection moulding tool, applying a base layer (4) to the side of the cover layer (2) opposite to the carrier layer (5);
**characterized in that**
f) a curable cover layer is used as the cover layer and the cover layer is cured in a process step;
g) the decorative elements are applied to the cover layer by sprinkling;
h) removing the carrier layer (5) from the finished product consisting of the base layer (4), the decorative elements (3) and the cover layer (2), whereby the decorative surface on the outer side of the injection-moulded piece is made exposed.

2. The method according to claim 1, **characterized in that** the pre-formed carrier layer (5) is made from sheet metal or plastic material.

3. The method according to claim 1 or 2, **characterized in that** the cover layer (2) comprises curable plastic or curable adhesive.

4. The method according to any one of claims 1 to 3, **characterized in that** the cover layer (2) is made of transparent or translucent plastic material.

5. The method according to any one of claims 1 to 4, **characterized in that** in a further process step, the exposed cover layer (2) of the finished product is processed, preferably by grinding or polishing.

6. The method according to any one of claims 1 to 5, **characterized in that** the decorative surface is covered with a layer of lacquer.

7. The method according to any one of claims 1 to 6, **characterized in that** the decorative elements (3) are made of waste products and natural materials.

8. The method according to any one of claims 1 to 7, **characterized in that** the decorative elements (3) are selected from the following group of materials: wood chips, metal shavings, metal splinters, plastic waste, paper scraps, carbon fibres, glass fibres or basalt fibres, textile scraps, metal foil scraps, paint scraps or usable natural materials, for example gravel, snail shell, mussel, fruit bowl, wood, minerals.

9. The method according to any one of claims 1 to 8, **characterized in that** a multi-layer design comprising a base layer (4), an intermediate layer with decorative elements (3) and a cover layer (2), and a second multi-layer design comprising likewise a base layer (4'), an intermediate layer with decorative elements (3') and a cover layer (2') are formed, wherein the outer base layer (4') is made of a transparent or translucent plastic material.

10. An injection-moulded piece with a decorative surface, consisting of a plastic base layer (4) produced by injection moulding, a cover layer (2) located on one side of the base layer (4) and a plurality of decorative elements (3) therebetween and embedded in both layers,
**characterized in that**
the decorative elements (3) are distributed in a random pattern, and
on the outer side of the injection-moulded piece, the decorative elements (3) and the cover layer (2) together form a decorative surface.

11. The injection-moulded piece according to claim 10, **characterized in that** the cover layer (2) is made of a transparent or translucent material.

12. The injection-moulded piece according to claim 10 or 11, **characterized in that** the decorative elements (3) are made of waste products and natural materials.

13. The injection-moulded piece according to any one of claims 10 to 12, **characterized in that** the decorative elements (3) are selected from the following group of materials: wood chips, metal shavings, metal splinters, plastic waste, paper scraps, carbon fibres, glass fibres or basalt fibres, textile scraps, metal foil scraps, paint scraps or usable natural materials, for example gravel, snail shell, mussel, fruit bowl, wood, minerals.

14. The injection-moulded piece according to any one of claims 10 to 13, **characterized in that** a multi-layer structure (5') comprising a base layer (4), an intermediate layer with decorative elements (3) and a cover layer (2), and a second structure comprising a base layer (4'), an intermediate layer with decorative elements (3') and a cover layer (2') are formed, the outer base layer (4) being made of a transparent or translucent plastic material.

15. The injection-moulded piece according to any one of claims 10 to 14, **characterized in that** the decorative surface is covered with a layer of lacquer.

## Revendications

1. Procédé de fabrication d'une pièce moulée par injection, le procédé consistant à :
a) prévoir une couche de support (5) préformée en correspondance avec une forme d'un outil de moulage par injection;
b) appliquer une couche de couverture (2) collante sur une face de la couche de support (5);
c) appliquer sur la couche de couverture (2) une pluralité d'éléments décoratifs (3) individuels, les éléments décoratifs (3) s'intégrant ainsi au moins partiellement dans la couche de couverture (2);
d) durcir la couche de couverture (2), les éléments décoratifs (3) étant de ce fait fixés sur la couche de support (5);
e) appliquer une couche de base (4) dans l'outil de moulage par injection sur la face de la couche de couverture (2) opposée à la couche de support (5);
**caractérisé par le fait qu'**il consiste à
f) utiliser une couche de couverture durcissante comme couche de couverture et à durcir la couche de couverture dans une étape de procédé;
g) appliquer par projection les éléments décoratifs sur la couche de couverture, et à
h) retirer la couche de support (5) du produit fini constitué de la couche de base (4), des éléments décoratifs (3) et de la couche de couverture (2), la surface décorative étant exposée sur la face extérieure de l'outil de moulage par injection.

2. Procédé selon la revendication 1, **caractérisé par le fait que** la couche de support (5) préformée est réalisée en tôle métallique ou en matière plastique.

3. Procédé selon la revendication 1 ou 2, **caractérisé par le fait que** la couche de couverture (2) est réalisée en matière plastique durcissante ou en matière adhésive durcissante.

4. Procédé selon l'une quelconque des revendications 1 à 3, **caractérisé par le fait que** la couche de couverture (2) est réalisée en matière plastique transparente ou translucide.

5. Procédé selon l'une quelconque des revendications 1 à 4, **caractérisé par le fait qu'**il consiste à traiter dans une autre étape de procédé la couche de couverture (2) exposée du produit fini de préférence par meulage ou par polissage.

6. Procédé selon l'une quelconque des revendications 1 à 5, **caractérisé par le fait que** la surface décorative est recouverte par une couche de vernis.

7. Procédé selon l'une quelconque des revendications 1 à 6, **caractérisé par le fait que** les éléments décoratifs (3) sont réalisés à partir de déchets ou de matériaux naturels.

8. Procédé selon l'une quelconque des revendications 1 à 7, **caractérisé par le fait que** les éléments décoratifs (3) sont choisis dans le groupe suivant de matériaux : copeaux de bois, copeaux métalliques, éclats métalliques, déchets en matière plastique, rognures de papier, fibres de carbone, de verre ou de basalte, chutes de tissu, chute de films métalliques, résidus de peinture ou matériaux naturels utilisables tels que gravier, coquille d'escargot, moule, coque de fruit, bois, minéraux.

9. Procédé selon l'une quelconque des revendications 1 à 8, **caractérisé par le fait qu'**il consiste à former une structure multicouche à partir d'une construction multicouche comprenant une couche de base (4), une couche intermédiaire avec des éléments décoratifs (3) et une couche de couverture (2), ainsi qu'à partir d'une deuxième construction multicouche comprenant également une couche de base (4'), une couche intermédiaire avec des éléments décoratifs (3') et une couche de couverture (2'), la couche de base (4') extérieure étant réalisée en matière plastique transparente ou translucide.

10. Pièce moulée par injection avec une surface décorative, constituée d'une couche de base (4) en matière plastique fabriquée par moulage par injection, d'une couche de couverture (2) située sur une face de la couche de base (4) et d'une pluralité d'éléments décoratifs (3) intégrés entre celles-ci dans les deux couches, **caractérisée par le fait que** les éléments décoratifs (3) sont répartis en un agencement aléatoire, et
les éléments décoratifs (3) et la couche de couverture (2) forment ensemble sur la face extérieure de la pièce moulée par injection une surface décorative.

11. Pièce moulée par injection selon la revendication 10, **caractérisée par le fait que** la couche de couverture (2) est constituée en matériau transparent ou translucide.

12. Pièce moulée par injection selon la revendication 10 ou 11, **caractérisée par le fait que** les éléments décoratifs (3) sont réalisés à partir de déchets ou de matériaux naturels.

13. Pièce moulée par injection selon l'une quelconque des revendications 10 à 12, **caractérisée par le fait que** les éléments décoratifs (3) sont choisis dans le groupe suivant de matériaux : copeaux de bois, copeaux métalliques, éclats métalliques, déchets en matière plastique, rognures de papier, fibres de carbone, de verre ou de basalte, chutes de tissu, chute de films métalliques, résidus de peinture ou matériaux naturels utilisables tels que gravier, coquille d'escargot, moule, coque de fruit, bois, minéraux.

14. Pièce moulée par injection selon l'une quelconque des revendications 10 à 13, **caractérisée par le fait qu'**une construction multicouche est formée à partir d'une structure multicouche (5') comprenant une couche de base (4), une couche intermédiaire avec des éléments décoratifs (3) et une couche de couverture (2), ainsi qu'à partir d'une deuxième structure multicouche comprenant une couche de base (4'), une couche intermédiaire avec des éléments décoratifs (3') et une couche de couverture (2'), la couche de base (4) extérieure étant constituée en matière plastique transparente ou translucide.

15. Pièce moulée par injection selon l'une quelconque des revendications 10 à 14, **caractérisée par le fait que** la surface décorative est recouverte d'une couche de vernis.
